# EUROPÄISCHE PATENTSCHRIFT

(11) **EP 2 953 757 B1**
(45) Veröffentlichungstag und Bekanntmachung des Hinweises auf die Patenterteilung: **23.05.2018**
(21) Anmeldenummer: 13811424.4
(22) Anmeldetag: 13.12.2013
(51) Int. Cl.: B23K 1/08, B08B 7/02, B08B 3/12, B23K 1/20, B23K 3/06, B23K 3/08

(54) **VERFAHREN UND LÖTVORRICHTUNG MIT EINER VORRICHTUNG ZUM REINIGEN EINER LÖTDÜSE UNTER VERWENDUNG VON EINER SCHALLQUELLE**
METHOD OF AND SOLDERING DEVICE WITH A DEVICE FOR CLEANING A SOLDERING NOZZLE USING A SOUND SOURCE
PROCÉDÉ ET DISPOSITIF AVEC UN DISPOSITIF POUR NETTOYER UNE BUSE DE SOUDAGE UTILISANT UNE SOURCE SONIQUE

(30) Priorität: 17.01.2013 DE 102013100473
(43) Veröffentlichungstag der Anmeldung: 16.12.2015
(73) Patentinhaber: SEHO Systemtechnik GmbH, 97892 Kreuzwertheim (DE)
(72) Erfinder: HERZ, Thomas, 97892 Kreuzwertheim (DE); SCHMITT, Gerald, 97267 Himmelstadt (DE); ZOCH, Reiner, 01454 Radeberg (DE); WALTER, Markus, 97877 Wertheim (DE)
(74) Vertreter: Patronus IP Patent- und Rechtsanwälte
(86) Internationale Anmeldenummer: PCT/EP2013/076625
(87) Internationale Veröffentlichungsnummer: WO 2014/111213

(56) Entgegenhaltungen:
- DE-U1-202009 002 666
- JP-A- H1 157 572
- JP-A- H04 274 399
- JP-A- S48 100 352
- US-A1- 2011 204 031

## Beschreibung

Die vorliegende Erfindung betrifft ein Verfahren zum Reinigen einer Lötdüse gemäß dem Oberbegriff des Anspruchs 1, sowie eine Lötvorrichtung gemäß dem Oberbegriff des Anspruchs 6 (siehe z.B. DE 20 2009 002 666 U1). Aus dem Stand der Technik sind bereits Lötvorrichtungen bekannt, mittels denen elektronische Bauteile auf Leiterplatten fixiert werden können. Der grundsätzliche Aufbau einer solchen Lötvorrichtung ist beispielsweise aus der DE 84 08 427 U1 bekannt. Die dort beschriebene Lötvorrichtung weist einen Behälter auf, in dem sich flüssiges Lot befindet. Innerhalb des Behälters ist eine Lotdruckkammer angeordnet, an der eine nach oben gerichtete Düse vorgesehen ist. Bei bestimmungsgemäßem Gebrauch wird mittels einer Pumpe flüssiges Lot in die Lotdruckkammer gepumpt. Durch den dort entstehenden Durchfluss bzw. Überdruck fließt das flüssige Lot durch die Düse und tritt an deren oberen Ende aus. Das austretende Lot fließt anschließend über die Außenseite der Düse in den Behälter zurück. Auf diese Weise entsteht eine Lotwelle, in die eine zu verlötende Verbindung eingetaucht werden kann, wodurch diese mit Lot benetzt und durch anschließendes Abkühlen verlötet wird.

Weiterhin sind aus dem Stand der Technik Vorrichtungen zum Ultraschalllöten bekannt.

In der D1 (DE 32 18 338 A1) sind ein Lötverfahren und eine Lötvorrichtung beschrieben. Hierbei ist vorgesehen, dass im Bereich der zu verbindenden Teile angeordnete flüssige Fluss- und/oder Lötmittel zusätzlich mittels Ultraschall in Schwingung versetzt werden. Gemäß dieser Vorrichtung strömt das Lot in einer Gegenlaufwelle auf einem gekrümmten Blech (Wellenformer) entgegen der Förderrichtung der zugeführten Platine. Es kann auch vorgesehen sein, dass die Lötwelle in zwei Richtungen abströmt. Unterhalb des Bleches ist im Bereich der Platine eine Ultraschallquelle angeordnet. Somit wird hauptsächlich der Wellenformer mit den Ultraschallwellen beaufschlagt. Mittels der Ultraschallquelle soll das gekrümmte Blech und somit das darauf abströmende flüssige Zinn derart in Schwingung versetzt werden, dass beim Verlöten der elektrischen Anschlüsse der Bauteile mit den Leiterbahnen der Platinen eine gute Reinigung und Benetzung zustande kommt. Auf diese Weise soll das Auftreten kalter Lötstellen vermieden werden.

Aus der DE 44 32 402 A1 geht eine Vorrichtung zum flussmittelfreien Löten mittels Ultraschall hervor. Gemäß dieser Vorrichtung ist vorgesehen, Leiterplatten über die Lötwelle einer Schwall-Lötdüse zu führen, wobei das Lötmittel mit mindestens einer Ultraschallelektrode (Sonotrode) in Schwingung versetzt wird. Die Oberfläche der Sonotrode wird dabei unmittelbar von der Lötwelle überspült und die Leiterplatten werden dicht über die Oberfläche der Sonotrode geführt. Die Sonotrode ist Bestandteil des Wellenformers bzw. des Leitbleches ist. Die Ultraschallschwingungen der Sonotrode sollen eine gute Reinigung und Benetzung der Oberflächen der zu verlötenden Teile bewirken. Auf diese Weise soll eine Vorbehandlung der zu verlötenden Teile mittels Flussmitteln nicht mehr erforderlich sein. Gemäß einem Ausführungsbeispiel ist eine Mini-Welle zum bereichsweisen Löten von Flachbaugruppen vorgesehen. In einem Lötmittelbehälter befindet sich eine Sonotrode, die Bestandteil einer Ringdüse ist. Die Sonotrode und die Ringdüse sind mit einer vertikalen Bohrung und einer horizontalen Anschlussbohrung versehen, an welche eine Pumpe angeschlossen ist. Mittels der Pumpe kann Lötmittel aus dem Lötmittelbehälter über die Sonotrode zur Düse gepumpt werden, sodass sich eine Lötwelle an der Lotaustrittsöffnung der Bohrung bildet. Die Lotaustrittsöffnung ist zentrisch innerhalb der Ringdüse angeordnet, wobei deren eckiger oder kreisringförmiger Randbereich die Leitfläche für den Lötmittelstrom zum Aufbau der Lötwelle bildet. Gemäß dieser Ausführungsform wird somit eine Düse die in unmittelbarem Kontakt mit der Sonotrode steht sowie das darin strömende Lot in Schwingung versetzt.

Es bestehen erhebliche Bedenken, dass eine Sonotrode in den vom flüssigen Lot umspülten Körper einer Miniwellenlötdüse integriert sein kann, da hier Temperaturen vorliegen, die bekannte kompakte Sonotroden nicht auf Dauer aushalten können. Weiterhin ist es auch nicht möglich, dass eine Sonotrode außerhalb des Lotbades angeordnet und an die Miniwellenlötdüse gekoppelt ist, da die Schallwellen nicht nur auf die Miniwellenlötdüse sondern auch auf das gesamte Lotbad übertragen werden. Ein zielgerichtetes Beaufschlagen des Lötbereichs mit Schall ist nicht möglich.

Aus der JP H08-31 703 A geht eine Ultraschalllötvorrichtung hervor (siehe Titel). Gemäß dieser Vorrichtung soll durch den Einsatz von Ultraschallwellen die Lötqualität verbessert werden und zudem auf den Einsatz von Flussmittel verzichtet werden können. Hierbei erstreckt sich die Ultraschallquelle in das geschmolzene Lot. Hierbei ist vorgesehen, das zu lötende Bauteil den Ultraschallwellen auszusetzen und mittels Kavitation Luftblasen, Fette und Öle zu entfernen. Weiterhin soll mittels der Ultraschallwellen eine Oxidschicht entfernt werden. Auf diese Weise soll die Qualität der Lötverbindung erhöht werden.

Aus der JP H06-315 765 A geht eine Lötvorrichtung mit einer Ultraschallquelle zum Ultraschalllöten hervor. Hierbei ist vorgesehen ein zu lötendes Bauteil im Lotbad einer Lötdüse anzuordnen. Auf einer Seite des zu lötenden Bauteils ist im Lotbad die Ultraschallquelle, und gegenüberliegend zur Ultraschallquelle ist ein Reflektor angeordnet. Der Abstand von der Ultraschallquelle zum Reflektor soll in etwa der Wellenlänge der verwendeten Ultraschallwellen entsprechen. Auf diese Weise soll das zu lötende Bauteil wohl im Bereich der maximalen Amplitude der Welle angeordnet sein. Mit dem Reflektor soll der Energieverbrauch beim Ultraschalllöten reduziert werden.

Die in der JP H08-31 703 A und der JP H06-315 765 A offenbarten Vorrichtungen sind nicht zum Selektivlöten geeignet, da bei diesen Vorrichtungen durch den Aufbau der Ultraschalleinrichtungen und der Löteinrichtung ein Bewegen einer Leiterplatte über die diese Vorrichtungen und auch eine Bewegen der Vorrichtung hin zu einer Leiterplatte nicht möglich ist. Weiterhin könne Ultraschallerzeuger auch nicht beliebig weite weg positioniert werde, da der Ultraschall nicht über einen beliebig langen Weg übertragbar ist.

In der JP S54/148137 A sollen Ultraschallwellen verwendet werden, um einen Lotstrom in Schwingung zu versetzen, so dass die Oberfläche zwischen dem zu lötenden Objekt und dem Lot zu aktiviert wird, um auf den Einsatz von Flussmittel verzichten zu können.

Im Fachbuch "Weichlöten in der Elektrotechnik" von R.J. Klein, zweite Auflage, Leuze Verlag, Seiten 94 bis 96, wird als einzige wichtige Anwendung zum Ultraschalllöten das Weichlöten von Aluminiumteilen beschrieben. Weiterhin heißt es darin "Ultraschalllöten auf einem Bad oder einer Welle ist nicht möglich, weil die Masse der Leiterplatten nicht geeignet ist Kavitation zu erzeugen (bei akzeptablen Amplituden und Schwingungen)."

Der vorstehend beschriebene Stand der Technik offenbart Ultraschalllötvorrichtungen, bei denen die mittels des Ultraschalls erzeugten Vibrationen eine Beschleunigung der Flüssigkeit bewirken sollen, die dann örtlich abreißt (Kavitation). Insbesondere werden hierbei die zu verlötendenden Bauteile Ultraschallwellen ausgesetzt, die über das Lot übertragen werden. Mittels derartiger Vorrichtungen soll auf den Einsatz von Flussmittel verzichtet werden können, was in der Praxis jedoch nie realisiert werden konnte. Dies ist im Fachbuch "Weichlöten in der Elektrotechnik" von R.J. Klein beschrieben.

Aus dem Stand der Technik sind zudem Düsen bekannt, bei denen das Lot nicht über die Außenseite der Düse abläuft. In diesen Düsen ist ein Einsatz, beispielsweise in Form einer Blechzunge, angeordnet, der den Innenraum der Düse unterteilt. Bei bestimmungsgemäßem Gebrauch wird durch einen Teil des Innenraums das Lot gefördert, tritt am oberen Ende der Düse aus und fließt über den Einsatz in den zweiten Teil des Innenraums und kann dann weggeleitet werden.

Zudem gibt es auch Lötvorrichtungen, die keine Pumpe verwenden. Bei diesen Lötvorrichtungen taucht ein Lötstempel der Lötdüse in ein Lötbad ein und nimmt dabei auf seiner Oberseite eine gewisse Menge Lot in einer Art Kuhle auf. Die Lötdüse wird dann auf die zu verlötende Stelle bewegt, wobei die zu verlötende Stelle in die Kuhle eingetaucht wird, sodass sie mit Lot benetzt und dadurch schließlich verlötet wird.

Alle Arten von Düsen können zumindest teilbereichsweise verzinnt sein, da das Lot auf verzinnten Oberflächen bevorzugt abläuft und das Lot auf diese Weise von den weiteren Oberflächen weggehalten werden kann. Bei den Düsen mit Einsatz ist der Einsatz verzinnt, sodass das Lot an diesem entlangläuft. Bei Düsen ohne Einsatz ist die Außenfläche zumindest teilbereichsweise verzinnt.

Ein Problem, welches bei dem Betrieb von derartigen Lötvorrichtungen auftritt, ist die Bildung von sogenannter Krätze. Diese Krätze besteht in der Regel aus Flussmittelrückständen und Abwaschungen vom Lötgut Oxiden, die sich beim Kontakt des Lots mit Luftsauerstoff bilden. Bereits in der DE 84 08 427 U1 wird beschrieben, dass die Düsen ab und zu gereinigt werden müssen, um einen kontinuierlichen Lotfluss garantieren zu können. In dieser Druckschrift wird vorgeschlagen, dass die Düse von Zeit zu Zeit mechanisch mittels einer Nadel, die in und aus der Düse geführt werden kann, gereinigt wird. Derartige Reinigungsvorrichtungen beseitigen jedoch die Krätze nur unzureichend und können zudem die Düse beschädigen. Weiterhin ist es bekannt Düsen von außen mittels Bürsten zu reinigen.

Eine Möglichkeit zur Verminderung der Krätzebildung ist die Verwendung von sogenannten Aktivatoren. Aus der EP 0 536 472 B1 ist ein Lötkolben bekannt, bei dem Carbonsäuren als Aktivatoren zum Einsatz kommen. Die Aktivatoren werden einem Schutzgas beigemischt, welches die Lötstelle umströmt, was dazu führen soll, dass sich an der Lötstelle sowie an umliegenden Bereichen keine Krätze bildet bzw. dass bestehende Krätze abgebaut wird. Nachteilig bei diesem Verfahren ist insbesondere, dass zusätzliche Stoffe, nämlich die Aktivatoren, verwendet werden müssen. Diese Stoffe können sich mit dem Lot vermischen, was die Qualität der Lötstellen beeinflussen kann. Zudem können die Aktivatoren das Lötbad einer Lötvorrichtung, in der das Lot zirkuliert, verunreinigen. Schließlich kann trotz der Verwendung von Aktivatoren die Krätzebildung nicht vollständig vermieden werden.

Aus der DE 20 2009 002 666 U1 geht eine Vorrichtung zur Reinigung und/oder Aktivierung von Lötdüsen mit einem Reinigungs- und/oder Aktivierungsmittel hervor, wobei das Reinigungs- und/oder Aktivierungsmittel mittels einer Steuereinheit automatisch der Lötdüse zugeführt wird.

In der JP H11 57572 A ist eine Vorrichtung zum Bestücken von Leiterplatten offenbart. Diese Vorrichtung umfasst einen Düsenkopf, eine Überwachungseinrichtung mit einer Kamera sowie eine Düsenreinigungseinrichtung. Eine Öffnung des Düsenkopfes weist dabei in vertikaler Richtung nach unten. Mittels der Kamera wird der Zustand der Düse überprüft. Wenn die Düse aufgrund von Anhaftungen außerhalb vorgegebener Toleranzen liegt, wird die Düse zur Reinigungseinrichtung verfahren und dort mittels eines elektrostriktiven Elementes gereinigt.

Aus der JP S48 100352 A geht eine Vorrichtung zum Wellenlöten hervor.

Aus der US 2011/204031 A1 geht eine Vorrichtung zum Schutzgasschweißen hervor. Hierbei ist vorgesehen, eine Brennerdüse bzw. einen Brennerkopf berührungslos zu reinigen. Dies soll mittels einer Ultraschallreinigungseinrichtung erfolgen.

Aus der JP H04 274399 A geht eine Montagevorrichtung für elektronische Bauteile hervor. Diese Vorrichtung weist eine Ultraschallreinigungseinrichtung auf. Die Ultraschallreinigungseinrichtung soll von Zeit zu Zeit relativ zu einer Düse verfahren werden um diese zu reinigen.

Es ist daher Aufgabe der Erfindung, ein Verfahren zum Reinigen einer Lötdüse bereitzustellen, bei dem die Krätze möglichst vollständig entfernt wird.

Es ist eine weitere Aufgabe der Erfindung, ein Verfahren zum Reinigen einer Lötdüse bereitzustellen, welches einen möglichst geringen Einfluss auf den Betrieb der Lötdüse hat.
Diese Aufgaben werden durch ein Verfahren gemäß Anspruch 1 gelöst.

Es ist eine weitere Aufgabe der Erfindung, eine Lötvorrichtung bereitzustellen, die einen möglichst kontinuierlichen Betrieb ermöglicht.

Diese Aufgabe wird durch eine Lötvorrichtung gemäß Anspruch 6 gelöst.

Vorteilhafte Weiterbildungen sind Gegenstand der jeweiligen Unteransprüche.

Das erfindungsgemäße Verfahren zum Reinigen einer Lötdüse, insbesondere einer zumindest teilweise verzinnten Lötdüse, zeichnet sich insbesondere dadurch aus, dass mittels Schall einer beliebigen Frequenz einer Schallquelle Verunreinigungen, insbesondere unerwünschte Oxide, von der Lötdüse entfernt werden. Es hat sich herausgestellt, dass sich eine Reinigung von Lötdüsen mittels Schall besonders gut eignet, um eine Lötdüse von unerwünschten Verunreinigungen vollständig zu befreien. Besonders vorteilhaft ist hierbei, dass das Material der Lötdüse an sich nicht beeinträchtigt wird. Durch den Schall werden lediglich die Verunreinigungen von der Oberfläche der Düse abgelöst und die Düse ist wieder vollumfänglich funktionstüchtig.

Das erfindungsgemäße Verfahren und eine erfindungsgemäße Vorrichtung sind insbesondere zum Selektivlöten ausgebildet. Beim Selektivlöten fließt flüssiges Lot durch eine relativ zur Baugruppe bewegbare Miniwellenlötdüse und tritt an deren oberen Ende aus. Das austretende Lot fließt anschließend über eine Außenseite der Düse in ein Lotbad zurück. Auf diese Weise entsteht eine Lotwelle, in die einzelne Lötbereiche bzw. -punkte einer zu verlötenden Verbindung einer Baugruppe eingetaucht werden, wodurch diese mit Lot benetzt und durch anschließendes Abkühlen verlötet werden.

Im Rahmen der vorliegenden Erfindung wird unter einer Schallquelle eine Schallquelle zum Erzeugen von Frequenzen von 16 Hz bis 300 kHz und somit zum Erzeugen von Schall und/oder Ultraschall verstanden.

Insbesondere wird eine Schallquelle zum Erzeugen von Frequenzen von zumindest 100 Hz bzw. 300 Hz bzw. 600 Hz bzw. 900 Hz bzw. 1 kHz bzw. 5 kHz bzw. 10 kHz, bzw. 20 kHz, bzw. 25 kHz bzw. 30 kHz, bzw. 35. kHz bis 40 kHz, bzw. 45 kHz, bzw. 50 kHz bzw. 55 kHz, bzw. 60. kHz und vorzugsweise von 35 kHz verwendet.

In diesem Frequenzbereich findet Kavitation statt mittels der die Reinigung der Düsenoberfläche erfolgt.

Für die Reinigung wird die Schallquelle in die Nähe der Verunreinigungen gebracht. Besonders vorteilhaft ist es dabei, wenn die Schallquelle mit flüssigem Lot, insbesondere einer Lotwelle, die an einem Ende der Lötdüse gebildet wird, in Berührung gebracht wird. In dem flüssigen Lot breitet sich der Schall deutlich besser aus, was dazu führt, dass die Reinigung deutlich gründlicher und vollständiger ist.

Eine Schallquelle im Sinne der vorliegenden Erfindung ist eine Einrichtung zum Erzeugen von hörbarem Schall und/oder Ultraschall, vorzugsweise ein oder mehrere Piezoelemente, wie z.B. piezoelektrische Quarz- oder Keramikschwinger, oder eine Ultraschallquelle, wie z.B. ein piezokeramisches Element, oder eine Spule. Unter dem Begriff "Schall" wird sowohl hörbarer Schall als auch Ultraschall verstanden.

Mit dem erfindungsgemäßen Verfahren ist es nicht mehr notwendig Reinigungs- und/oder Aktivierungsmittel der Lötdüse zuzuführen. Diese Mittel müssen gemäß dem Stand der Technik vorgehalten und bei Bedarf zudosiert werden. Die Erfindung benötigt hingegen keine Verbrauchsmaterialien.

Wird die Lötdüse in Betrieb genommen dann erfolgt die Reinigung der Lötdüse nach der Inbetriebnahme, da die Lötdüsen, insbesondere deren verzinnte Abschnitte während längerer Stillstandzeiten oxidieren und sich Krätze bildet.

Bei bestimmungsgemäßem Gebrauch der Lötdüse ist es oftmals so, dass diese ständig in Betrieb ist, dass also ständig eine Lötwelle vorhanden ist.

Im Betrieb kommt es an der Oberfläche der Lötdüse, insbesondere an deren Außenfläche zu Verkrustungen durch eingebrannte Oxide und/oder Rückstände von Flussmitteln.

Jedoch taucht nicht zu jedem Zeitpunkt eine zu lötende Verbindung bzw. ein elektronisches Bauteil und ein Teil einer Leiterplatte bzw. ein Baugruppe in die Lötwelle ein.

Daraus ergeben sich Leerlaufphasen, in denen die Lötwelle keine spätere Lötstelle benetzt. Diese Leerlaufphasen können dafür genutzt werden, die Reinigung durchzuführen. Da derartige Leerlaufphasen ohnehin bei bestimmungsgemäßem Gebrauch der Lötdüse vorkommen, führt die Reinigung der Lötdüse durch das erfindungsgemäße Verfahren nicht zu einer Verzögerung eines nachfolgenden Prozessschrittes. Auf diese Weise kann trotz des zusätzlich vorhandenen Reinigungsschritts die Prozessdauer des Verlötungsprozesses konstant gehalten werden.

Als Leerlaufphase wird auch eine Zeitspanne zwischen zwei oder mehreren Zyklen definiert.

Das Löten einer Baugruppe und das Verfahren hin zu oder weg von einer Lötdüse wird als Zyklus bezeichnet. Ein derartiger Zyklus dauert im Normalfall zwischen 30 Sekunden und 10 Minuten bzw. zwischen 1 Minute und 6 Minuten. Insbesondere kann vorgesehen sein, die Lötdüse nach 5 bis 20 Zyklen und vorzugsweise nach jedem achten bis fünfzehnten Zyklus zu Reinigen.

Dadurch, dass erfindungsgemäß ein Reinigen einer Lötdüse nach einem oder mehreren Zyklen vorgesehen ist, entfallen die zeitaufwändigen und kostenintensiven aus dem Stand der Technik bekannten Reinigungsschritte und der Lötprozess wird durch das notwendige Reinigen einer Lötdüse mittels des erfindungsgemäßen Verfahrens nur geringfügig verzögert. Zudem kann permanent mit einer sauberen und somit einwandfreie Lötbereiche- bzw. punkte erzeugenden Lötdüse gelötet werden.

Vorzugsweise wird eine Lötdüse für etwa 3 Sekunden bis 1,5 Minuten, bzw. für 5 Sekunden bis 45 Sekunden und insbesondere für 10 Sekunden bis 30 Sekunden mit Schall bzw. Ultraschall gereinigt.

Ein derartiges Verfahren ist voll automatisierbar und erfordert keine optische Nachkontrolle der Lötdüse.

Bei einer weiter vorteilhaften Weiterbildung des erfindungsgemäßen Verfahrens wird die Schallquelle in zumindest eine Öffnung der Lötdüse eingeführt. Insbesondere bei Lötdüsen mit Einsatz fallen Verunreinigungen nicht nur an der obersten Kante der Lötdüse oder des Einsatzes, sondern auch in tiefer liegenden Regionen an. Durch das Einführen der Schallquelle in eine Öffnung der Lötdüse werden auch diese Verunreinigungen sicher beseitigt. Durch den konstanten Fluss von Lot durch die Lötdüse wird dabei sichergestellt, dass die Verunreinigungen abtransportiert werden.

Um auch bei Düsen mit einem komplexeren Aufbau eine vollständige Reinigung garantieren zu können, ist bei einer vorteilhaften Weiterbildung des erfindungsgemäßen Verfahrens vorgesehen, dass die Schallquelle innerhalb zumindest einer Öffnung der Lötdüse und/oder entlang zumindest einer Kante und/oder eines Einsatzes der Lötdüse bewegt wird. Ist die Lötdüse beispielsweise mit einer länglichen Öffnung versehen, so kann die Schallquelle an einem Ende der Öffnung in diese eingeführt und anschließend entlang der Längserstreckung der Düse bewegt werden. Dadurch werden Verunreinigungen in sämtlichen Bereichen der Öffnung entfernt. Bei Düsen, an denen das Lot außen abläuft, kann beispielsweise mittels einer Schallquelle die Außenfläche unter Einhaltung eines geringen Abstands abgefahren werden, sodass auf einfache Art und Weise und mit geringem Materialeinsatz die gesamte Außenfläche der Düse von Verunreinigungen befreit werden kann.

Besonders bevorzugt wird für das erfindungsgemäße Verfahren Schall im Bereich von 30 kHz bis 40 kHz, insbesondere von 35 kHz verwendet. Diese Frequenzbereiche haben sich als besonders vorteilhaft für die Reinigung von Lötdüsen herausgestellt. Bei einer Solchen Frequenz ist vorteilhaft, dass sich wenig Sauerstoff beim Übertragen durch das Lot in das Lot einlagert und somit wenig Oxidation stattfindet.

Besonders bevorzugt wird für das erfindungsgemäße Verfahren Ultraschall im Bereich von 15 kHz bis 2 MHz, insbesondere 20 kHz bis 300 kHz verwendet. Diese Frequenzbereiche haben sich als besonders vorteilhaft für die Reinigung von Lötdüsen herausgestellt.

Die Vorrichtung zum Reinigen einer Lötdüse ist für die Verwendung in einer Lötvorrichtung gemäß der Erfindung vorgesehen und wird nachfolgend auch als Reinigungsvorrichtung bezeichnet. Durch die Ultraschallquelle der erfindungsgemäßen Vorrichtung ist eine effektive und gründliche Reinigung einer Lötdüse möglich.

Die Schallquelle weist bevorzugt einen Schallerzeuger und eine Schallleiteinrichtung auf. Der Schallerzeuger ist dabei für die eigentliche Erzeugung des Schalls zuständig, während die Schallleiteinrichtung den Schall von dem Schallerzeuger zu der Lotwelle bzw. der Lötdüse leitet. Der Schallerzeuger kann dadurch in einiger Entfernung zu der Lötdüse angeordnet sein, was vorteilhaft ist, da Schallerzeuger in der Regel anfällig gegenüber erhöhten Temperaturen sind, wie sie bei Lötdüsen auftreten.

Die Ultraschallquelle weist bevorzugt einen Ultraschallerzeuger und eine Ultraschallleiteinrichtung auf. Der Ultraschallerzeuger ist dabei für die eigentliche Erzeugung des Ultraschalls zuständig, während die Ultraschallleiteinrichtung den Ultraschall von dem Ultraschallerzeuger zu der Lotwelle bzw. der Lötdüse leitet. Der Ultraschallerzeuger kann dadurch in einiger Entfernung zu der Lötdüse angeordnet werden, was vorteilhaft ist, da Ultraschallerzeuger in der Regel anfällig gegenüber erhöhten Temperaturen sind, wie sie bei Lötdüsen vorhanden sind.

Die Schall- bzw. die Ultraschallleiteinrichtung kann rohrförmig ausgestaltet sein, da sich der Ultraschall gut von der Rohrform leiten lässt. An einem Ende der Schall- bzw. der Ultraschallleiteinrichtung sitzt der Schall- bzw. der Ultraschallerzeuger, das andere Ende kann in die Lotwelle eingetaucht werden. Alternativ kann die Ultraschallleiteinrichtung den Schall- bzw. den Ultraschall auch mittels eines stangenartigen Körpers leiten. Auch in Festkörpern kann sich der Schall- bzw. der Ultraschall gut ausbreiten. Der stangenartige Körper kann dann ebenfalls in die Lotwelle oder direkt an die Lötdüse gehalten werden, wodurch die Verunreinigungen gelöst werden.

Bei einer vorteilhaften Weiterbildung der Vorrichtung zum Reinigen einer Lötdüse ist die Schall bzw. die Ultraschallquelle zwischen mehreren Positionen verfahrbar, wobei die Schall bzw. die Ultraschallquelle in einer ersten Reinigungsposition die Lotwelle berühren kann und in einer zweiten Standby-Position die Lotwelle nicht berührt.

Zum Verfahren ist eine Bewegungseinrichtung vorgesehen.

Dadurch kann die Vorrichtung in den laufenden Betrieb der Lötdüse eingebaut werden. Befindet sich an der Lötdüse, insbesondere eingetaucht in die Lotwelle, eine Baugruppe oder Verbindung, die verlötet werden soll, so befindet sich die Ultraschallquelle in der Standby-Position. In dieser Position behindert sie die Baugruppe nicht, sodass der Verlötungsvorgang wie aus dem Stand der Technik bekannt vollzogen werden kann. Ist nun die Baugruppe nicht mehr im Bereich der Lötdüse, so kann die Ultraschallquelle in die erste Reinigungsposition verbracht werden, in der sie die Lötdüse von Verunreinigungen befreit. Diese Leerlaufphasen, in denen also keine Baugruppe verlötet werden soll, können von der Vorrichtung zum Reinigen einer Lötdüse vollständig genutzt werden. Kurz bevor die nächste Baugruppe in den Bereich der Lötdüse gelangt, wird die erfindungsgemäße Vorrichtung wieder in die Standby-Position bewegt, sodass auch die nächste Baugruppe wie gewohnt und ohne Zeitverzögerung verlötet werden kann.

Die Ultraschallquelle kann auch stationär sein. Dann wird die Lötdüse bzw. die Selektivlöteinrichtung zum Reinigung zur Schall- bzw. Ultraschallquelle mittels der Bewegungseinrichtung bewegt.

Alternativ kann auch die Ultraschallquelle stationär sein. Dann wird die Lötdüse und gegebenenfalls das Lötbad zur Reinigung um die Ultraschallquelle herum bewegt.

Bei einer vorteilhaften Weiterbildung der Vorrichtung weist diese ein kappenförmiges Element auf, in dem die Schall bzw. die Ultraschallquelle angeordnet ist. Das kappenförmige Element ist dabei vorteilhafterweise so ausgestaltet, dass es mit geringem Abstand an die Außenform der Düse angelehnt ist. Zum Reinigen der Lötdüse wird das kappenförmige Element über die Lötdüse gestülpt. Dadurch bildet das kappenförmige Element mit der äußeren Geometrie der Lötdüse einen Zwischenraum, in dem sich der Schall bzw. der Ultraschall leichter ausbreiten kann, sodass eine gründliche Reinigung der Lötdüse sichergestellt ist. Der Schall wird über das Lot übertragen, das sich im Zwischenraum befindet.

Als besonders vorteilhaft wird im Rahmen der Erfindung ebenfalls angesehen, mehrere Schall- bzw. Ultraschallquellen vorzusehen. Auf diese Weise können gleichzeitig mehrere Bereiche der Lötdüse gereinigt werden. Bei einer Düse mit einem Einsatz eignet sich insbesondere eine Vorrichtung mit zwei Schall- bzw. Ultraschallquellen, wobei jeweils eine Schall- bzw. Ultraschallquelle in jede der beiden Teilöffnungen der Düse, die von dem Einsatz getrennt werden, eingeführt wird. Auch in Kombination mit dem kappenförmigen Element ist die Verwendung von mehreren Schall- bzw. Ultraschallquellen vorteilhaft, da auf diese Weise die gesamte Außenfläche der Düse gereinigt werden kann, ohne dass eine Bewegung des kappenförmigen Elements notwendig wäre. Nichtsdestotrotz kann die Vorrichtung auch dann eine Bewegung vollführen, wenn eine Mehrzahl von Schall- bzw. Ultraschallquellen vorgesehen ist. In diesem Fall dient die Mehrzahl der Schall- bzw. Ultraschallquellen einer Verminderung der Reinigungszeit.

Um auch innerhalb einer Öffnung einer Lötdüse eine gründliche Reinigung zu ermöglichen, ist bei einer vorteilhaften Weiterbildung der erfindungsgemäßen Vorrichtung zum Reinigen einer Lötdüse vorgesehen, dass die erfindungsgemäße Vorrichtung zumindest ein stabförmiges Element aufweist oder als stabförmiges Element ausgebildet ist, wobei an dem stabförmigen Element die Schall- bzw. Ultraschallquelle angeordnet ist. Dadurch ist auch ein Reinigen von tiefer liegenden Regionen einer Lötdüse möglich. Das stabförmige Element kann dann in eine Öffnung der Lötdüse eingeführt werden und die tiefer liegenden Bereiche reinigen.

Damit auch Lötdüsen mit mehreren Öffnungen gründlich und in einem annehmbaren Zeitraum gereinigt werden können, ist bei einer vorteilhaften Weiterbildung der erfindungsgemäßen Vorrichtung vorgesehen, dass die Vorrichtung einen gabelförmigen Bereich aufweist. Diese Form der Weiterbildung eignet sich insbesondere für Lötdüsen mit mehreren, parallel zueinander verlaufenden Öffnungen. Besonders vorteilhaft ist es, wenn der gabelförmige Bereich mehrere Zinken aufweist, wobei an zumindest zwei Zinken eine Ultraschallquelle angeordnet ist. Der gabelförmige Bereich kann dabei so ausgestaltet sein, dass ein Zinken in eine Öffnung der Lötdüse und ein weiterer Zinken in eine weitere Öffnung der Lötdüse eintaucht, sodass sich gleichzeitig in beiden Öffnungen ein Zinken mit einer Schall- bzw. Ultraschallquelle befindet. Auf diese Weise können beide Öffnungen gleichzeitig gereinigt werden. Sind mehr als zwei Zinken vorhanden, so können auch an den weiteren Zinken Schall- bzw. Ultraschallquellen vorgesehen werden. Bevorzugt ist an jedem Zinken eine Schall- bzw. Ultraschallquelle angeordnet.

Bevorzugt erzeugt die Ultraschallquelle der erfindungsgemäßen Vorrichtung Ultraschall im Bereich von 15 kHz bis 2 MHz, insbesondere 20 kHz bis 300 kHz. Diese Frequenzbereiche sind besonders vorteilhaft für die Reinigung von Lötdüsen.

Gemäß einer Weiterbildung der vorliegenden Erfindung ist eine Spritzschutzeinrichtung zum Ableiten von umherspritzendem Lot beim Reinigen der Lötdüse vorgesehen. Die Spritzschutzeinrichtung ist als rohrförmiger Körper ausgebildet, so dass sie die Schall- bzw. Ultraschallquelle beim Reinigen geringfügig beabstandet umgibt. Die Schall- bzw. Ultraschallquelle erzeugt vorzugsweise eine stehende Welle. Im Bereich des Nulldurchgangs der stehenden Welle kommt es zu keinen bzw. nur geringfügigen Schwingungen. Die Spritzschutzeinrichtung ist daher vorzugsweise an der Ultraschallleiteinrichtung im Bereich des Nulldurchgangs befestigt, so dass diese nicht schwingt und sich somit nicht lösen kann. Weiterhin kann die Spritzschutzeinrichtung auch oberhalb der Sonotrode befestigt sein.

Umherspritzendes Lot spritzt beim Reinigen gegen eine innere Mantelwandung des rohrförmigen Körpers und läuft von dort aufgrund der Schwerkraft nach unten in das Lot bzw. in ein Lotbad, z.B. das bei einer Düse zum Selektivlöten vorhandenen Lotbad zum Aufnehmen von über die Düsenaußenfläche ablaufendem Lot. Der rohrförmige Körper ist vorzugsweise ein elastischer Glasfaserschlauch, der derart über die Schall- bzw. Ultraschallquelle gezogen werden kann, dass er von dieser in etwa 2 mm bis 2,5 cm bzw. 5 mm bis 1,5 cm und insbesondere 7 mm bis 1 cm vorsteht. Dieses Ende der Spritzschutzeinrichtung kann aufgrund der elastischen Ausbildung des Schlauches konisch zulaufend in Richtung Lötdüse ausgebildet sein. Auch andere geeignete Materialien, die ein Ableiten von Lot ermöglichen sind denkbar.

Die Spritzschutzeinrichtung kann auch aus einem anderen geeigneten lotableitenden ober aber auch lotabsorbierendem Material ausgebildet sein.

Auch eine starre Ausbildung der Spritzschutzeinrichtung ist möglich.

Die erfindungsgemäße Lötvorrichtung weist zumindest eine Lötdüse und zumindest eine Vorrichtung zum Reinigen einer Lötdüse gemäß den obigen Beschreibungen auf. Bevorzugt ist dabei die Ultraschallquelle der Vorrichtung zum Reinigen einer Lötdüse in zumindest einer Öffnung der Lötdüse einführbar und oder umgibt diese kappenförmig.

Vorzugsweise werden die Anzahl der Schall bzw. Ultraschallquellen und die Geometrie der Reinigungsvorrichtung an die vorhandenen Düsen angepasst. Dabei kann in einer Lötvorrichtung mit mehreren Lötdüsen eine zentrale Reinigungsvorrichtung vorgesehen werden, die so ausgestaltet ist, dass mit dieser Vorrichtung alle Lötdüsen gereinigt werden können. Alternativ können auch mehrere Reinigungsvorrichtungen vorgesehen werden, insbesondere für jede Lötdüse oder jede Form von Lötdüse eine speziell angepasste Reinigungsvorrichtung. Für die Lötvorrichtung der DE 102 15 963 A1 könnten beispielsweise zwei Reinigungsvorrichtungen vorgesehen werden. Eine für die rohrförmigen Lötdüsen und eine weitere für die langgestreckte Lötdüse.

Bevorzugt ist die erfindungsgemäße Lötvorrichtung eine Wellenlötvorrichtung, insbesondere eine Miniwellenlötvorrichtung und/oder eine Multiwelle und/oder eine Selektivlötvorrichtung, oder eine Lötvorrichtung mit einer oder mehreren Lötdüse in Form eines Lötstempels.

Besonders vorteilhaft ist die Reinigungsvorrichtung bei einer Selektivlötvorrichtung mit einer Lötdüse, bei der Leiterplatte und Lötdüse relativ zueinander und über ein Koordinatensystem gesteuert bewegt werden. Bei einer solchen Lötvorrichtung kann bereits mittels einer einzigen Reinigungsvorrichtung die einzelne Düse gereinigt werden, was wiederum besonders wirtschaftlich ist.

Die Erfindung wird nachfolgend beispielhaft anhand von neun Figuren dargestellt und erläutert. Es zeigen dabei:
Figur 1: eine Lötdüse mit einer ersten Ausführungsform der Vorrichtung zum Reinigen einer Lötdüse;
Figur 2: die Lötdüse der Figur 1 mit einer weiteren Ausführungsform der Vorrichtung zum Reinigen einer Lötdüse;
Figur 3: eine Lötdüse mit Einsatz und einer weiteren Ausführungsform einer Vorrichtung zum Reinigen einer Lötdüse;
Figur 4: die Lötdüse der Figur 1 mit einer weiteren Ausführungsform einer Vorrichtung zum Reinigen einer Lötdüse;
Figur 5: eine weitere Ausführungsform einer Vorrichtung zum Reinigen einer Lötdüse;
Figur 6: eine Ausführungsform einer Ultraschallquelle für eine Reinigungsvorrichtung;
Figur 7: eine weitere Ausführungsform einer Ultraschallquelle für eine Reinigungsvorrichtung;
Figur 8 eine weitere Ausführungsform einer Vorrichtung zum Reinigen einer Lötdüse; und
Figur 9 eine weitere Ausführungsform einer Vorrichtung zum Reinigen einer Lötdüse;

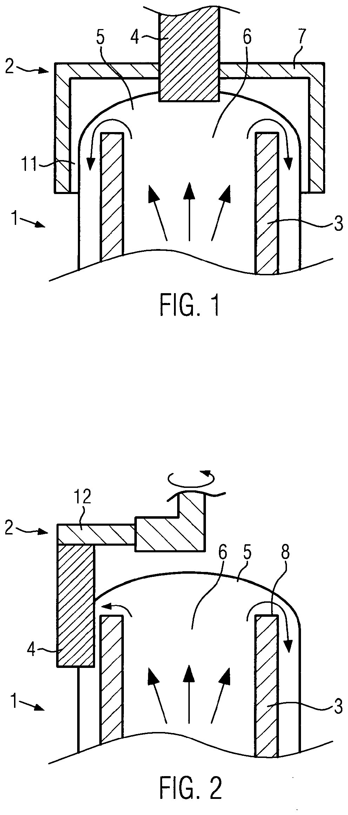

Die in der Figur 1 dargestellte Lötdüse 3 einer Lötvorrichtung 1, die in einem Längsschnitt dargestellt ist, weist einen rohrartigen Querschnitt auf. Im Inneren der Lötdüse 3 befindet sich flüssiges Lot, welches durch weitere Bestandteile einer Lötvorrichtung (nicht gezeigt) durch die Lötdüse 3 gefördert wird und an ihrem oberen Ende durch eine Öffnung 6 austritt. Dabei entsteht eine Lotwelle 5 aus flüssigem Lot, in die eine Baugruppe oder eine zu lötende Verbindung getaucht werden kann, wodurch diese mit Lot benetzt und dadurch verlötet wird.

An dem oberen Ende der Lötdüse 3 ist eine Vorrichtung zum Reinigen einer Lötdüse (im Folgenden Reinigungsvorrichtung 2) angeordnet bzw. anordbar. Die Reinigungsvorrichtung 2 weist ein kappenförmiges Element 7 auf, welches an die Form der Lötdüse 3 angepasst ist und daher ebenfalls einen rohrartigen Querschnitt aufweist, wobei der Innendurchmesser geringfügig größer ist als der Außendurchmesser der Lötdüse 3.

In einem zentralen Bereich des kappenförmigen Elements 7 ist eine Ultraschallquelle 4 angeordnet.

Das kappenförmige Element kann als Ultraschallleiteinrichtung ausgebildet sein, die Bestandteil der Ultraschallquelle ist.

Zur Durchführung des erfindungsgemäßen Verfahrens wird die Ultraschallquelle 4 eingeschaltet, sodass sie Ultraschall aussendet. Dabei steht die Ultraschallquelle 4 mit der Lotwelle 5 in Berührung. Der Ultraschall kann sich in dem zwischen dem kappenförmigen Element 7 und der Lötdüse 3 gebildeten Zwischenraum 11 und vor allem in der Lotwelle 5 ausbreiten. Dadurch gelangt der Ultraschall zu Verunreinigungen, die insbesondere an der Außenfläche der Lötdüse 3 vorhanden sind und löst diese von der Lötdüse 3 ab. Durch den kontinuierlichen Fluss von Lot werden die Verunreinigungen abtransportiert, sodass diese nach der Beendigung des Reinigungsprozesses nicht wieder an der Lötdüse 3 anhaften.

In Figur 2 ist eine weitere Ausführungsform der Reinigungsvorrichtung 2 dargestellt, bei der kein kappenförmiges Element vorhanden ist. Die Reinigungsvorrichtung 2 besteht dort aus einem Arm 12, an dessen Ende eine Ultraschallquelle 4 angeordnet ist. Die Ultraschallquelle 4 ist dabei ausgehend von dem Arm 12 auf die Außenfläche der Lötdüse 3 ausgerichtet. Der Arm 12 ist drehbar um eine Achse gelagert, die der Zentralachse der Lötdüse 3 entspricht. Wird der Arm 12 um diese Drehachse gedreht, so fährt die Ultraschallquelle 4 nach und nach den gesamten Umfang der Lötdüse 3 ab. Der Arm 12 ist teleskopierbar und somit an Lötdüsen mit unterschiedlichen Durchmessern anpassbar.

Bei dieser Ausführungsform der Reinigungsvorrichtung 2 taucht die Ultraschallquelle 4 ebenfalls in die Lotwelle 5 ein. Dies führt zu einer besonders gründlichen Reinigung, da sich die Ultraschallwellen der Ultraschallquelle 4 in dem flüssigen Lot besonders gut ausbreiten können.

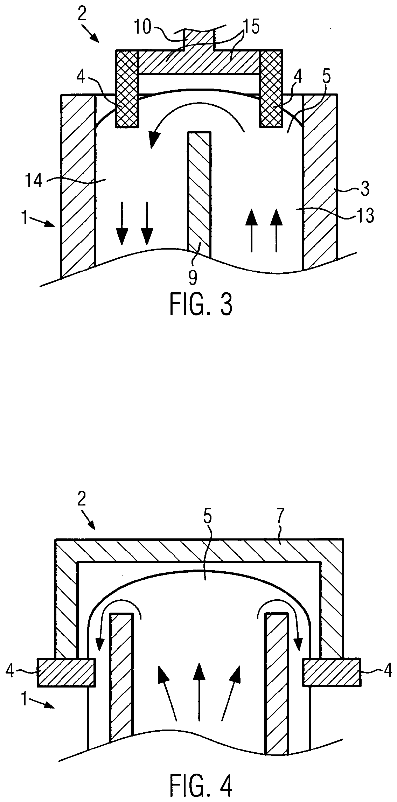

Die in Figur 3 dargestellte Lötdüse 3 ist eine Lötdüse mit einem Einsatz 9. Bei dieser Lötdüse 3 fließt das flüssige Lot nicht an der Außenfläche der Lötdüse 3 ab, sondern aus einer ersten Teilkammer 13 in eine zweite Teilkammer 14. Die zwei Teilkammern 13, 14 werden von dem Einsatz 9 getrennt. Dadurch entsteht eine Lotwelle 5, die aus der ersten Teilkammer 13 über den Einsatz 9 in die zweite Teilkammer 14 springt. Der Einsatz 9 ist bei derartigen Düsen in der Regel verzinnt.

Obwohl es grundsätzlich möglich wäre, auch solche Düsen mit nur einer Ultraschallquelle 4 zu reinigen, indem diese zunächst in die erste Teilkammer 13 und danach in die zweite Teilkammer 14 eingeführt wird, ist bei der in Figur 3 dargestellten Ausführungsform der Reinigungsvorrichtung 2 ein gabelförmiger Bereich 10 vorgesehen, an dem sich die Vorrichtung 2 in mehrere Zinken 15 verzweigt. Bei der dargestellten Ausführungsform sind dies zwei Zinken 15. An jedem der beiden Zinken ist eine Ultraschallquelle 4 angeordnet. Die eine Ultraschallquelle 4 wird in die erste Teilkammer 13 und die zweite Ultraschallquelle 4 wird in die zweite Teilkammer 14 eingeführt. Dadurch stehen beide Ultraschallquellen 4 mit der Lotwelle 5 in Berührung. Auf diese Weise können gleichzeitig Verunreinigungen in der ersten Teilkammer 13 und in der zweiten Teilkammer 14 gelöst werden.

Gemäß einem nicht dargestellten Ausführungsbeispiel, dass dem in der Figur 3 dargestellten Ausführungsbeispiel ähnlich ist, kann die Lötdüse verzinnte Einsätze mit mehreren ersten Teilkammern aufweisen, wobei der vorstehend beschriebene Einsatz 9 gemäß diesem Ausführungsbeispiel eine Überlaufkante ausbildet.

Auch bei Lötdüsen, die verzinnte Einsätze aufweisen, können diese somit beidseitig oder gleichzeitig gereinigt werden.

Bei der Ausführungsform der Reinigungsvorrichtung 2 gemäß Figur 4 sind ebenfalls zwei Ultraschallquellen 4 vorgesehen. Die Reinigungsvorrichtung 2 weist ein kappenförmiges Element 7 auf, welches über die Lötdüse 3 gestülpt ist. Da bei dieser Art der Lötdüse 3 vorrangig die Außenseiten gereinigt werden müssen, sind die Ultraschallquellen 4 so angeordnet, dass sie im Bereich der Außenfläche der Lötdüse 3 mit der Lotwelle 5 in Berührung kommen. Auf diese Weise wird die Außenfläche gründlich gereinigt.

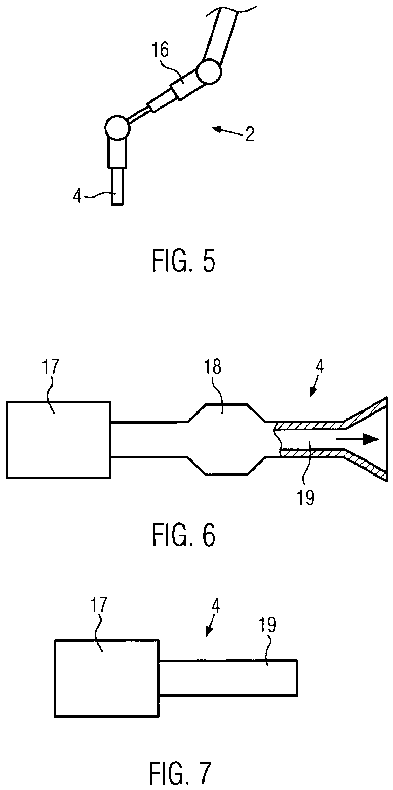

Die Figur 5 zeigt eine Ausführungsform der Reinigungsvorrichtung 2, mit der verschieden geformte Lötdüsen gereinigt werden können. Die Reinigungsvorrichtung 2 weist einen Manipulatorarm 16 auf, an dessen Ende eine Ultraschallquelle 4 angeordnet ist. Die Ultraschallquelle 4 kann fest an dem Manipulatorarm 16 montiert sein. Alternativ kann der Manipulatorarm 16 mit einer Greifeinrichtung (nicht dargestellt) ausgerüstet sein, mit der eine Ultraschallquelle 4 wahlweise aufgenommen und abgelegt werden kann. Da sich der Manipulatorarm 16 frei im Raum bewegen und entsprechend programmiert werden kann, ist es möglich, dass der Manipulatorarm 16 verschiedene Lötdüsen abfährt und jeweils die Ultraschallquelle 4 in die Lotwelle eintaucht. Auf diese Weise ist eine gründliche Reinigung verschiedenartiger Lötdüsen möglich.

Figur 6 zeigt eine Ausführungsform einer Ultraschallquelle 4 für die Reinigungsvorrichtung. Die Ultraschallquelle 4 weist an einem Ende einen Ultraschallerzeuger 17 auf, der Ultraschall erzeugt. Der Ultraschall gelangt nach der Erzeugung in einen Ultraschallverstärker 18, der den Ultraschall verstärkt. Anschließend wird der Ultraschall durch eine rohrförmige Ultraschallleiteinrichtung 19 in die durch den Pfeil dargestellte Richtung geleitet und tritt dadurch konzentriert am sich verbreiternden Ende der Ultraschallquelle 4 aus. Dieses Ende wird bei bestimmungsgemäßem Gebrauch mit der Lötdüse oder der Lotwelle in Berührung gebracht, wodurch sich der Ultraschall dann in der Lotwelle oder der Lötdüse weiter ausbreitet.

Die Figur 7 zeigt eine alternative Ausgestaltung der Ultraschallquelle 4, bei der die Ultraschallleiteinrichtung 19 stangenförmig, also aus Vollmaterial, gebildet ist. Der Ultraschall wird direkt von dem Ultraschallerzeuger 17 an die Ultraschallleiteinrichtung 19 übertragen und breitet sich dort aus. Das freie Ende der Ultraschallleiteinrichtung 19 kann dann bei bestimmungsgemäßem Gebrauch mit der Lotwelle oder der Lötdüse in Berührung gebracht werden.

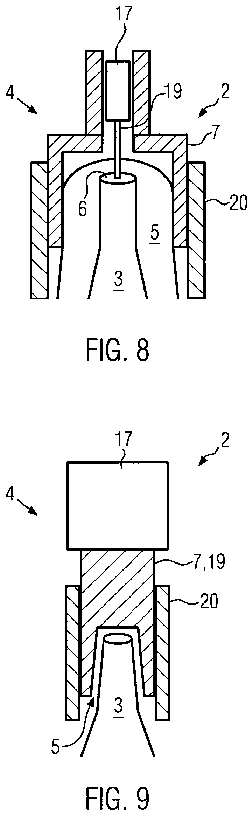

Weiterhin ist erfindungsgemäß eine Lötvorrichtung 1 vorgesehen (Figur 9). Die Lötvorrichtung 1 umfasst zumindest eine Lötdüse 3 und zumindest eine Vorrichtung 2 zum Reinigen einer Lötdüse.

Die Vorrichtung 2 zum Reinigen einer Lötdüse umfasst eine Ultraschallquelle 4 mit einem Ultraschallerzeuger 17 an dem eine Ultraschallleiteinrichtung 19 angeordnet ist. Weiterhin kann die Ultraschallquelle 4 einen Ultraschallverstärker (nicht dargestellt) aufweisen. Die Ultraschallleiteinrichtung 19 ist als kappenförmiges Element ausgebildet.

Die Lötdüse 3 und die Vorrichtung 2 zum Reinigen einer Lötdüse sind mittels einer Bewegungseinrichtung relativ zueinander derart bewegbar, dass die Lötdüse 3 im Bereich unter der Vorrichtung 2 zum Reinigen einer Lötdüse derart anordbar ist, dass eine Schall- bzw. Ultraschallleiteinrichtung 19 mit dem aus der Lötdüse, insbesondere einer Miniwellenlötdüse austretenden Lot kontaktiert. Hierdurch sind die von der Schall- bzw. Ultraschallquelle ausgesendete Schallwellen über das Lot in Richtung zur Düse 3, insbesondere zur Außenfläche einer Lötdüse zum Selektivlöten übertragbar.

Weiterhin ist erfindungsgemäß eine Lötvorrichtung 1 vorgesehen (Figur 8). Die Lötvorrichtung 1 umfasst zumindest eine Lötdüse 3 und zumindest eine Vorrichtung 2 zum Reinigen einer Lötdüse.

Die Vorrichtung 2 zum Reinigen einer Lötdüse umfasst eine Ultraschallquelle 4 mit einem Ultraschallerzeuger 17 an dem eine Ultraschallleiteinrichtung 19 angeordnet ist. Weiterhin kann die Ultraschallquelle 4 einen Ultraschallverstärker (nicht dargestellt) aufweisen. Die Ultraschallleiteinrichtung 19 ist als stabförmiges Element ausgebildet. Die Ultraschallleiteinrichtung 19 ist von einem kappenförmigen Element 7 umgeben.

Die Vorrichtung 2 zum Reinigen einer Lötdüse ist im vorliegenden Ausführungsbeispiel ortsfest angeordnet. Eine Verfahreinrichtung der Wellenlöteinrichtung mit Lotbad kann als Bewegungseinrichtung verwendet werden, um die Lötdüse relativ zu Bewegen, so dass diese wie vorstehend beschrieben angeordnet wird.

Ein umgekehrter Aufbau bei dem die Lötdüse 3 ortsfest ist und die Vorrichtung 2 zum Reinigen einer Lötdüse beweglich ist, ist möglich. Auch können die Lötdüse 3 und die Vorrichtung 2 zum Reinigen einer Lötdüse beide mittels der Bewegungseinrichtung verfahrbar ausgebildet sein.

Die Lötvorrichtung ist vorzugsweise eine Selektivlöteinrichtung mit einer Miniwellenlötdüse.

Gemäß einer Weiterbildung der vorliegenden Erfindung ist eine Spritzschutzeinrichtung 20 zum Ableiten von umherspritzendem Lot beim Reinigen der Lötdüse vorgesehen (Figur 8). Die Spritzschutzeinrichtung 20 ist derart als schlauchförmiger bzw. rohrförmiger Körper ausgebildet, dass sie die Reinigungseinrichtung insbesondere die Ultraschallleiteinrichtung, insbesondere wenn diese als kappenförmiges Element ausgebildet ist, oder auch die Schall- bzw. Ultraschallquelle und die Lötdüse beim Reinigen geringfügig beabstandet umgibt. Umherspritzendes Lot spritzt beim Reinigen gegen eine innere Mantelwandung des rohrförmigen Körpers und läuft von dort aufgrund der Schwerkraft nach unten entweder in das verflüssigte Lot oder einen separaten Auffangbehälter ab. Der rohrförmige Körper 20 ist vorzugsweise ein Glasfaserschlauch. Auch andere geeignete Materialien, die ausreichend hitzestabil sind und ein Ableiten von Lot ermöglichen sind denkbar.

Die Schall- bzw. Ultraschallquelle erzeugt vorzugsweise eine stehende Welle. Im Bereich des Nulldurchgangs der stehenden Welle kommt es zu keinen bzw. nur geringfügigen Schwingungen. Die Spritzschutzeinrichtung 20 ist daher vorzugsweise an der Ultraschallleiteinrichtung 19 im Bereich des Nulldurchgangs befestigt, so dass diese nicht schwingt und sich somit nicht lösen kann. Weiterhin kann die Spritzschutzeinrichtung auch oberhalb der Sonotrode befestigt sein.

Die Vorrichtung 2 zum Reinigen einer Lötdüse kann auch als Handgerät zum manuellen Reinigen einer Lötdüse derart ausgebildet sein, dass eine Lötdüse nach einer vorbestimmten Anzahl von Zyklen manuell gereinigt wird. Ein derartiges Handgerät umfasst zumindest eine Ultraschallquelle 4 mit einem Ultraschallerzeuger und einer Ultraschallleiteinrichtung, sowie ggfs. einem Ultraschallverstärker.

Die Reinigungsvorrichtung kommt besonders bevorzugt bei Selektivlöteinrichtungen zur Anwendung, da bei solchen Lötvorrichtungen einzelne Lötdüsen vorhanden sind, die sich gut durch die erfindungsgemäße Reinigungsvorrichtung reinigen lassen. Bei Wellenlötvorrichtungen mit einer einzelnen großen langgezogenen Lotwelle kann die Reinigungsvorrichtung zwar auch zum Einsatz kommen, dort nimmt die Reinigung jedoch mehr Zeit in Anspruch.

### Bezugszeichenliste

- 1: Lötvorrichtung
- 2: Reinigungsvorrichtung
- 3: Lötdüse
- 4: Ultraschallquelle
- 5: Lotwelle
- 6: Öffnung
- 7: kappenförmiges Element
- 8: Kante
- 9: Einsatz
- 10: gabelförmiger Bereich
- 11: Zwischenraum
- 12: Arm
- 13: erste Teilkammer
- 14: zweite Teilkammer
- 15: Zinken
- 16: Manipulatorarm
- 17: Ultraschallerzeuger
- 18: Ultraschallverstärker
- 19: Ultraschallleiteinrichtung
- 20: Spritzschutzeinrichtung

## Patentansprüche

1. Verfahren zum Reinigen einer Lötdüse (3), insbesondere einer zumindest teilweise verzinnten Lötdüse (3), **dadurch gekennzeichnet, dass** mittels Schall einer Ultraschallquelle (4) Verunreinigungen, insbesondere unerwünschte Oxide, von der Lötdüse (3) in Leerlaufphasen entfernt werden.

2. Verfahren zum Reinigen einer Lötdüse (3) gemäß Anspruch 1, **dadurch gekennzeichnet, dass** die Ultraschallquelle (4) mit flüssigem Lot, insbesondere einer Lotwelle (5), in Berührung gebracht wird.

3. Verfahren zum Reinigen einer Lötdüse (3) gemäß Anspruch 1 oder 2, **dadurch gekennzeichnet, dass** die Lötdüse (3) in Betrieb genommen wird, wobei die Reinigung bei Lötdüsen (3) zum Selektivlöten erfolgt und die Lötdüse (3) vorzugsweise für etwa 3 Sekunden bis 1,5 Minuten, bzw. für 5 Sekunden bis 45 Sekunden und insbesondere für 10 Sekunden bis 30 Sekunden mit Schall bzw. Ultraschall gereinigt wird.

4. Verfahren zum Reinigen einer Lötdüse (3) gemäß einem der vorhergehenden Ansprüche, **dadurch gekennzeichnet, dass** die Ultraschallquelle (4) in zumindest eine Öffnung (6) der Lötdüse (3) eingeführt wird, wobei die Ultraschallquelle (4) vorzugsweise innerhalb zumindest einer Öffnung (6) der Lötdüse (3) und/oder entlang zumindest einer Kante (8) und/oder entlang eines Einsatzes (9) der Lötdüse (3) bewegt wird.

5. Verfahren zum Reinigen einer Lötdüse (3) gemäß einem der vorhergehenden Ansprüche, **dadurch gekennzeichnet, dass** Ultraschall im Bereich von zumindest 5 kHz bzw. 10 kHz bzw. 15 kHz bis 40 kHz, bzw. 50 kHz bzw. 60 kHz und vorzugsweise von zumindest 35 kHz verwendet wird.

6. Lötvorrichtung aufweisend zumindest eine Lötdüse (3) und zumindest eine Vorrichtung (2) zum Reinigen einer Lötdüse (3), insbesondere einer zumindest teilweise verzinnten Lötdüse (3), **dadurch gekennzeichnet, dass** die Vorrichtung (2) zumindest eine Ultraschallquelle (4) und eine Bewegungseinrichtung umfasst, wobei die Bewegungseinrichtung derart ausgebildet ist, dass in einer Reinigungsposition die Vorrichtung und die Lötdüse (3) derart angeordnet sind, dass die Lötdüse (3) reinigbar ist und in einer Standby-Position die Vorrichtung und die Lötdüse (3) derart beabstandet voneinander angeordnet sind, dass eine Baugruppe lötbar ist.

7. Lötvorrichtung gemäß Anspruch 6, **dadurch gekennzeichnet, dass** die Ultraschallquelle (4) oder die Lötdüse (3) mittels der Bewegungseinrichtung eine Relativbewegung zueinander ausführen zwischen mehreren Positionen verfahrbar ist, wobei die Ultraschallquelle (4) in einer ersten Reinigungsposition eine Lotwelle (5) berühren kann und in einer zweiten Standby-Position die Lotwelle (5) nicht berührt.

8. Lötvorrichtung gemäß Anspruch 6 oder 7, **dadurch gekennzeichnet, dass** die Vorrichtung (2) ein kappenförmiges Element (7) aufweist, in dem die Ultraschallquelle (4) angeordnet ist, wobei das kappenförmige Element (7) eine Ultraschalleinreinrichtung (19) ist.

9. Lötvorrichtung gemäß einem der Ansprüche 6 bis 8, **dadurch gekennzeichnet, dass** die Vorrichtung (2) zumindest ein stabförmiges Element aufweist oder als stabförmiges Element ausgebildet ist, wobei die Ultraschallquelle (4) an dem stabförmigen Element angeordnet ist.

10. Lötvorrichtung gemäß einem der Ansprüche 6 bis 9, **dadurch gekennzeichnet, dass** die Vorrichtung (2) einen gabelförmigen Bereich (10) aufweist, wobei der gabelförmige Bereich (10) vorzugsweise mehrere Zinken aufweist, wobei an zumindest zwei Zinken eine Ultraschallquelle (4) angeordnet ist.

11. Lötvorrichtung gemäß einem der Ansprüche 6 bis 10, **dadurch gekennzeichnet, dass** die Ultraschallquelle (4) Ultraschall im Bereich 5 kHz bzw. 10 kHz bzw. 15 kHz bis 40 kHz, bzw. 50 kHz bzw. 60 kHz und vorzugsweise von 35 kHz, erzeugt.

12. Lötvorrichtung gemäß einem der Ansprüche 6 bis 11, **dadurch gekennzeichnet, dass** die Ultraschallquelle (4) eine schlauchförmige Spritzschutzeinrichtung zum Ableiten von Lot aufweist.

13. Lötvorrichtung gemäß einem der Ansprüche 6 bis 12, **dadurch gekennzeichnet, dass** die Ultraschallquelle (4) in zumindest eine Öffnung (6) der Lötdüse (3) einführbar ist oder die Lötdüse (3) kappenförmig umgibt, so dass von der Ultraschallquelle (4) ausgesendeter Schall auf die Innen und/oder Außenfläche der Lötdüse (3) übertragen wird.

14. Lötvorrichtung gemäß einem der Ansprüche 6 bis 13, **dadurch gekennzeichnet, dass** die Lötvorrichtung eine Wellenlötvorrichtung (1), insbesondere eine Miniwellenlötvorrichtung und/oder eine Multiwelle und/oder eine Selektivlötvorrichtung und/oder eine Stempellötvorrichtung, ist.

## Claims

1. Method for cleaning a solder nozzle (3), in particular a solder nozzle (3) which is at least partly tin-plated, **characterised in that** impurities (4), in particular undesired oxides, are removed from the solder nozzle during idle periods by means of sound from an ultrasonic source (4).

2. Method for cleaning a solder nozzle (3) according to claim 1, **characterised in that** the ultrasonic source (4) is brought into contact with liquid solder, in particular a solder wave (5).

3. Method for cleaning a solder nozzle (3) according to claim 1 or 2, **characterised in that** the solder nozzle (3) is brought into operation, wherein the cleaning is effected on solder nozzles (3) for selective soldering and wherein the solder nozzle (3) is preferably cleaned by sound or ultrasound for around 3 seconds to 1.5 minutes, or for 5 seconds to 45 seconds and in particular for 10 seconds to 30 seconds.

4. Method for cleaning a solder nozzle (3) according to any of the preceding claims, **characterised in that** the ultrasonic source (4) is introduced into at least one orifice (6) of the solder nozzle (3), wherein the ultrasonic source (4) preferably is moved within at least one orifice (6) of the solder nozzle (3) and/or along at least one edge (8) and/or along an insert (9) of the solder nozzle (3).

5. Method for cleaning a solder nozzle (3) according to any of the preceding claims, **characterised in that** ultrasound in the range of at least 5 kHz or 10 kHz or 15 kHz to 40 kHz or 50 kHz or 60 kHz and preferably of at least 35 kHz is used.

6. Soldering apparatus comprising at least one solder nozzle (3) and at least one apparatus (2) for cleaning a solder nozzle (3), in particular a partly tin-plated solder nozzle (3), **characterised in that** the apparatus (2) includes at least one ultrasonic source (4) and a movement device, wherein the movement device is so designed that, in a cleaning position, the apparatus and the solder nozzle (3) are so arranged that the solder nozzle (3) may be cleaned, and in a standby position the apparatus and the solder nozzle (3) are so spaced apart from one another that an assembly may be soldered.

7. Soldering apparatus according to claim 6, **characterised in that** the ultrasonic source (4) or the solder nozzle (3) may execute a relative movement towards one another between several positions by means of the movement device, wherein the ultrasonic source (4) in a first cleaning position is able to contact a solder wave (5), and in a second standby position does not contact the solder wave (5).

8. Soldering apparatus according to claim 6 or 7, **characterised in that** the apparatus (2) has a cap-shaped element (7) in which the ultrasonic source (4) is located, wherein the cap-shaped element is an ultrasonic device (19).

9. Soldering apparatus according to any of claims 6 to 8, **characterised in that** the apparatus (2) has at least one bar-shaped element or is in the form of a bar-shaped element, wherein the ultrasonic source (4) may be mounted on the bar-shaped element.

10. Soldering apparatus according to any of claims 6 to 9, **characterised in that** the apparatus (2) has a fork-shaped area (10), wherein the fork-shaped area (10) preferably has several prongs, with an ultrasonic source (4) located on at least two prongs.

11. Soldering apparatus according to any of claims 6 to 10, **characterised in that** the ultrasonic source (4) generates ultrasound in the range 5 kHz or 10 kHz or 15 kHz to 40 kHz or 50 kHz or 60 kHz and preferably of 35 kHz.

12. Soldering apparatus according to any of claims 6 to 11, **characterised in that** the ultrasonic source (4) has a tube-shaped spray protection fixture for carrying away solder.

13. Soldering apparatus according to any of claims 6 to 12, **characterised in that** the ultrasonic source (4) may be introduced into at least one orifice (6) of the solder nozzle (3) or encompasses the solder nozzle in a cap-like shape, so that sound emitted by the ultrasonic source (4) is transmitted to the inner and/or outer surface of the solder nozzle (3).

14. Soldering apparatus according to any of claims 6 to 13, **characterised in that** the soldering apparatus is a wave soldering apparatus (1), in particular a mini wave soldering apparatus and/or a multi wave and/or a selective soldering apparatus and/or a punch soldering apparatus.

## Revendications

1. Procédé de nettoyage d'une buse à souder (3), en particulier d'une buse de soudure au moins partiellement étamée (3), **caractérisé en ce qu'**au moyen de sons d'une source d'ultrasons (4) des impuretés, en particulier des oxydes indésirables, sont enlevé de la buse à souder (3) à éliminer.

2. Procédé de nettoyage d'une buse à souder (3) selon la revendication 1, **caractérisé en ce que** la source à ultrasons (4) est mise en contact avec de la soudure liquide, en particulier une vague de métal d'apport (5).

3. Procédé de nettoyage d'une buse à souder (3) selon la revendication 1 ou 2, **caractérisé en ce que** la buse à souder (3) est mis en fonctionnement, le nettoyage ayant lieu à des buses à souder (3) pour soudage sélectif et la buse à souder (3) préférablement étant nettoyée environ pendant 3 secondes à 1,5 minutes, ou pendant 5 secondes à 45 secondes et particulièrement pendant 10 secondes à 30 secondes au son ou aux ultrasons.

4. Procédé de nettoyage d'une buse à souder (3) selon l'une quelconque des revendications précédentes, **caractérisé en ce que** la source à ultrasons (4) est inséré dans au moins une ouverture (6) de la buse à souder (3), la source d'ultrasons (4) préférablement étant mouvée à l'intérieur d'au moins une ouverture (6) de la buse à souder (3) et / ou le long d'au moins un bord (8) et / ou le long d'un l'insert (9) de la buse à souder (3).

5. Procédé de nettoyage d'une buse à souder (3) selon l'une quelconque des revendications précédentes, **caractérisé en ce que** des ultrasons dans la plage d'au moins 5 kHz ou 10 kHz ou 15 kHz à 40 kHz, ou 50 kHz ou 60 kHz et de préférence d'au moins 35 kHz sont utilisés.

6. Appareil de soudage comprenant au moins une buse à souder (3) et au moins un appareil (2) pour le nettoyage d'une buse à souder (3), particulièrement d'une buse à souder (3) au moins partiellement étamée, **caractérisé en ce que** l'appareil (2) comprend au moins une source d'ultrasons (4) et un moyen de déplacement, le moyen de déplacement étant formé de telle manière, que dans une position de nettoyage l'appareil et la buse à souder (3) sont disposés tels, que la buse à souder (3) peut être nettoyée, et que dans une position de veille, l'appareil et la buse à souder (3) sont espacée de telle manière l'un de l'autre, qu'un assemblage peut être soudé.

7. Appareil de soudage selon la revendication 6, **caractérisé en ce que** la source d'ultrasons (4) ou la buse à souder (3), étant déplaçable entre plusieurs positions par le moyen du dispositif de déplacement, effectue un mouvement relatif l'un par rapport à l'autre, la source d'ultrasons (4) dans une première position de nettoyage pouvant toucher une vague de métal d'apport (5) et dans une seconde position de veille positionner la vague de soudure (5) ne touchant pas la vague de métal d'apport (5).

8. Appareil de soudage selon la revendication 6 ou 7, **caractérisé en ce que** l'appareil (2) comprend un élément en forme de capuchon (7), dans lequel la source d'ultrasons (4) est disposé, l'élément en forme de capuchon (7) étant un dispositif à ultrasons (19).

9. Appareil de soudage selon l'une quelconque des revendications 6 à 8, **caractérisé en ce que** l'appareil (2) comprend au moins un élément en forme de tige ou est formé comme un élément en forme de tige, dans lequel la source d'ultrasons (4) est disposé sur l'élément en forme de tige.

10. Appareil de soudage selon l'une quelconque des revendications 6 à 9, **caractérisé en ce que** le dispositif (2) comporte une partie en forme de fourche (10), la partie en forme de fourche (10) préférablement ayant une pluralité de dents, dans lequel, sur au moins deux dents, une source d'ultrasons (4) étant disposé.

11. Appareil de soudage selon l'une quelconque des revendications 6 à 10, **caractérisé en ce que** la source d'ultrasons (4) génère des ultrasons dans la plage de 5 kHz ou 10 kHz ou 15 kHz à 40 kHz, ou 50 kHz ou 60 kHz et de préférence d'au moins 35 kHz.

12. Appareil de soudage selon l'une quelconque des revendications 6 à 11, **caractérisée en ce que** la source d'ultrasons (4) comprend un dispositif de protection tubulaire pour l'évacuation de soudure.

13. Appareil de soudage selon l'une quelconque des revendications 6 à 12, **caractérisé en ce que** la source d'ultrasons (4) peut être introduite dans au moins une ouverture (6) de la buse à souder (3) où entoure la buse à souder (3) en forme de capuchon, de telle manière qu'un son émis à partir de la source d'ultrasons (3) et transmis sur les surfaces intérieures et / ou extérieures de la buse à souder (3).

14. Appareil de soudage selon l'une quelconque des revendications chiffre six à 13, **caractérisé en ce que** le l'appareil de soudage est un appareil de soudage ou brasage à vague (1), en particulier un appareil de soudage ou brasage à mini-vague et / ou un à un appareil de soudage sélectif et / ou un appareil de soudage à poinçage.
